# EUROPEAN PATENT SPECIFICATION

(11) **EP 3 470 549 B1**
(45) Date of publication and mention of the grant of the patent: **04.01.2023**
(21) Application number: 17812528.2
(22) Date of filing: 24.05.2017
(51) Int. Cl.: C23C 22/44, C23D 3/00, B05D 7/14, B05D 7/00, C09D 5/08, C09D 7/61, C23D 5/02, C23D 7/00

(54) **SURFACE TREATMENT AGENT, ENAMEL STEEL AND PART COATED WITH SAME**
OBERFLÄCHENBEHANDLUNGSMITTEL, EMAILSTAHL UND DAMIT BESCHICHTETES TEIL
AGENT DE TRAITEMENT DE SURFACE, ACIER À ÉMAILLER ET PIÈCE REVÊTUE DE CE DERNIER

(30) Priority: 12.06.2016 CN 201610407238
(43) Date of publication of application: 17.04.2019
(73) Proprietor: Baoshan Iron & Steel Co., Ltd., Shanghai 201900 (CN)
(72) Inventor: FANG, Wenqi, Shanghai 201900 (CN); MA, Yuan, Shanghai 201900 (CN); YANG, Jiayun, Shanghai 201900 (CN); WANG, Shuangcheng, Shanghai 201900 (CN)
(74) Representative: Held, Stephan
(86) International application number: PCT/CN2017/085609
(87) International publication number: WO 2017/215417

(56) References cited:
- EP-A1- 2 238 279
- WO-A1-2011/052520
- CN-A- 1 511 908
- CN-A- 1 671 885
- CN-A- 101 560 655
- CN-A- 101 560 655
- CN-A- 101 952 483
- CN-A- 102 245 807
- JP-A- 2006 152 435

## Description

### Technical field

The present invention relates to a surface treating agent, and more particularly to a surface treating agent for enamel steel or a part.

### Background art

Enamel steel products refer to composite materials that combine advantages such as strength and formability of steel plate with corrosion resistance, abrasive resistance and colorfulness of inorganic vitreous ceramic glaze material. Therefore, enamel steel products are widely used in various fields such as light industry, home appliances, construction and industry.

The conventional production process of enamel steel products is mainly as follows:
1) Molding the enamel steel, and obtaining a suitable part shape by jointing methods such as welding or riveting.
2) Degreasing, cleaning and drying the enamel steel or a part to remove oil residue from the surface.
3) Applying a ceramic glaze layer to the enamel steel or the part, the main components of the ceramic glaze layer include mineral raw materials such as quartz, feldspar and clay, chemical materials such as borax and metal oxides, and a small amount of pigment material.
4) Firing the enamel steel or the part to which the ceramic glaze layer is applied at a temperature of 700~900 °C for 3-8 minutes, so that the ceramic glaze layer is baked into an enamel layer, this process forms a strong bond in the interface between the enamel layer and the steel substrate for enamel by redox process between the steel substrate for enameling and the ceramic glaze layer.

In order to prevent the rustiness of enamel steel or part during transportation and storage, it is generally necessary to apply anti-rust oil when producing the enamel steel or part.

Moreover, in order to alleviate the friction between mold and steel substrate for enameling during the stamping in molding process, and prevent the steel substrate for enameling from cracking, it is necessary to add lubricating oil to the mold.

In order to ensure a firm adhesion between the enamel layer and the steel substrate for enamel as well as a good surface, the enamel steel products produced by the conventional production process must be surface treated after processing and joining. In the past few decades, many technical processes have been developed for the surface treatment of enamel steel or part, such as sand blasting, pickling, degreasing, nickel plating and plasma etching on surface of steel plates. The above technical processes are mainly for keeping the surface of the enamel steel or part clean and good in reactivity. However, the above surface treatment technologies for enamel steel or part inevitably uses anti-rust oil, lubricating oil, degreasing agent, acid liquid and nickel-containing solution, which has negative impacts on the environment and production cost.

In the prior art, in order to obtain a suitable surface of enamel steel product, the thickness of the enamel layer after firing needs to be 150 µm or more.

Some enamel steel products are produced by the "double-coated, double-fired" (2C/2F) method, that is, a second enamel layer is applied on the surface of the underlying enamel layer, and subjected to a secondary firing. The thickness of the enamel layer of this kind of enamel steel products generally reaches 300 µm or more.

In the prior art, in order to maintain the thickness of the enamel layer after firing of the enamel steel product, a large amount of expensive ceramic glaze material needs to be consumed. The thickness of the enamel layer in the prior art no longer meets the current requirements for saving ceramic glaze materials and lightweight and thin enamel steel products.

Both the European patent literature entitled "Steel sheet for porcelain enameling and method for production thereof, and enameled product and method for production thereof" (publication number: EP1266976A1, publication date: December 18, 2002) and the European patent literature entitled "Steel sheet for porcelain enameling and method for production thereof, and enameled product and method for production thereof" (publication number: EP1347070A1, publication date: September 24, 2003) focus on a method, wherein a Ni-Mo alloy is precoated to substrates such as low carbon aluminum-killed steel, high oxygen steel, titanium-added steel, niobium-added steel, titanium and niobium-added steel and boron-added steel by electroplating or chemical plating, and contents of Ni, Mo and Fe on the steel plate surface is controlled by subsequent heat treatment. These patents are suitable for improving the interface adhesion between enamel layer and steel substrate for enameling, and reducing the probability of occurrence of defects such as surface pinholes, black specks and fish eyes. Due to the chemicals used in the plating solution, such as salts, amines and sulfates, such technologies have a great risk of environmental contamination during application.

Chinese patent literature entitled "Process for the production of enameled steel sheet or part" (publication number: CN101896644A, publication date: November 24, 2010) relates to a method, wherein temporary corrosion protection and certain lubricating processability are achieved by uniformly dispersing non-oxide ceramics in the polymer coating of steel plates. The patent is suitable for reducing the temperature and shortening the time during the enamel firing process, and improving the interfacial adhesion between the enamel and the steel plate. However, such technology involves neither the resistance of the steel plate polymer coating to the acid, base and solvent-based degreasing techniques during the surface treatment process, nor the optimization and improvement measures on the plate processing problems such as scratching, abrasion, grinding and slag of enamel steel plate surface during molding processes such as stamping and rolling. Also, such technique does not involve the thinning of the enamel layer and the improvement of surface defects of the enamel layer such as surface pinholes, black specks and fish eyes.

Chinese patent literature entitled "Method for producing an enameled steel substrate" (publication number: CN101952483A, publication date: January 19, 2011) relates to a method, wherein an organic layer containing metal or metal oxide is obtained by applying a solution comprising a solvent, a polymer precursor, and at least one metal or metal oxide to the surface of the steel substrate, and aging the steel substrate. The organic layer can be deformed in a deep-drawing or other deformation process of the steel substrate without being damaged, and provide corrosion protection comparable to the protection offered by oiling and certain water resistance. The patent simplifies the "double coating, double firing" (2C2F) method to a "one coating, one firing" (1C1F) method by directly applying white or colored glaze, thereby reducing the consumption of ceramic glaze materials. However, such technology also does not involve the acid and base resistance and solvent resistance during surface treatment in processing of the enamel steel or part, and the design for lubrication, friction and wear resistance during molding. Also, such technique also does not involve the thinning of the enamel layer and the improvement on the surface defects of the enamel layer such as surface pinholes, black specks and fish eyes. Moreover, a large number of nano-scale oxide ceramics, which are expensive and difficult to disperse, are used in the technology, resulting in an increase in the cost of the coating process.

In the conventional production process of enamel steel products, the use of anti-rust oil, lubricating oil, degreasing agent, acid liquid and nickel-containing solution are required, which not only negatively affects the environment and production cost, but also complicates the processes. In the prior art, the thickness of the enamel layer of an enamel steel product is required to be 150 µm or more. The technical solution disclosed in the above patent document either pollutes the environment at the expense of thinning the enamel layer and improving enamel surface defects such as surface pinholes, black specks and fish eyes, or fails to involve an improvement of the processing technique, or fails to involve thinning the enamel layer and improving enamel surface defects such as surface pinholes, black specks and fish eyes.

In view of this, companies hope to obtain a surface treatment agent for enamel steel or part, so that the coated enamel steel or part has better performance parameters and well resistance to various chemical media, and a process flow of the manufacturing method of the enamel steel that can be simplified. Moreover, the surface treatment agent promotes the firing adhesion function of enamel, and the thickness of the enamel layer is reduced while ensuring a low incidence of surface defects of the enamel layer, thereby the production costs can be reduced.

Further, the CN 101 560 655 A discloses an aqueous surface processing agent for a precoating metallic material.

The WO 2011/052520 A1 discloses a metal surface treatment agent for forming on the surface of a metal material a surface treatment film capable of imparting high corrosion resistance to the metal material and strong adhesiveness in that a laminated film or extrusion laminated resin will not peel off.

The JP 2006-152435 A discloses a chromium-free agent for treating a metal surface used for imparting excellent corrosion resistance, alkali resistance and blackening resistance.

EP 2 238 279 A1 discloses a method for producing an enamelled steel substrate,

### Summary of the invention

An object of the present invention is to provide a surface treatment agent for enamel steel or part, wherein the surface of the enamel steel or part coated by the surface treatment agent can form an organic composite coating, so that the coated enamel steel or part has better performance parameters and good resistance to various chemical media, such as alkali-washing resistance or solvent resistance, that is, it has good resistance to alkaline- or solvent-based degreasing processes. Moreover, the surface treatment agent can be used to simplify the process flow of the manufacturing method of the enamel steel, that is, the molding process can be carried out without lubricating oil and anti-rust oil, and the adhesion between the enamel layer and the steel substrate for enamel can be improved. In other words, the incidence of surface defects of the enamel layer of enamel steel products prepared by materials coated with the surface treatment agent is lower than that of conventional enamel steel products having equal film thickness.

In order to achieve the above object, the present invention provides a surface treatment agent for enamel steel or part consisting of an aqueous solution, comprising the following solid components in parts by mass::
15 to 55 parts of an aqueous polymer resin A;
32 to 58 parts of an organosilane coupling agent B having at least one epoxy functional group; wherein the ratio of parts by mass of the organosilane coupling agent B to parts by mass of the aqueous polymer resin A is 0.6 to 2.2;
0.2 to 3 parts of a polyol C containing at least three hydroxyl groups;
0.05 to 2 parts by mass of a molybdenum compound D, in terms of elemental molybdenum;
0.1 to 1 parts by mass of a phosphorus compound E, in terms of elemental phosphorus;
0.1 to 1 parts by mass of a zirconium compound F, in terms of elemental zirconium;
0.5 to 8 parts of a metal salt or an organometallic compound G having a function of promoting adhesion, wherein the metal salt or organometallic compound G is a metal salt or an organometallic compound which promotes the adhesion between the enamel layer and the steel substrate for enameling in the sintering process of the ceramic glaze layer ; and the metal in the metal salt or organometallic compound G is at least one of Cu, Ca, Ba, W, Fe, Sb, Co, Al, In, Zn, Ni, Ti, V, Sn, Ge, Mn, Sr, and Ga.

In the above technical solution, the amount of the aqueous polymer resin A is controlled to be 15 to 55 parts by mass for the following reasons: when the amount of the aqueous polymer resin A is less than 15 parts by mass, the stamping formability of the enamel steel or part coated with the surface treatment agent may be lowered; when the amount of the aqueous polymer resin A is more than 55 parts by mass, the alkali-washing resistance and solvent resistance of the dry film of the organic composite coating formed by surface treatment agent and enamel steeling substrate surface after coating may be deteriorated. In a preferred embodiment, the amount of the aqueous polymer resin A is 35 to 45 parts by mass.

Herein, the aqueous polymer resin A in the above aqueous solution may be an aqueous solution or an aqueous dispersion type.

The amount of the organosilane coupling agent B having at least one epoxy functional group is controlled to be 32 to 58 parts by mass for the following reasons: when the amount of the component is less than 32 parts by mass, corrosion resistance and solvent resistance may be lowered; when the amount of the component is more than 58 parts by mass, the formed dry film of the organic composite coating has poor ductility, and the stamping deformation formability may be deteriorated.

And the ratio of parts by mass of the organosilane coupling agent B to the aqueous polymer resin A is controlled to be 0.6 to 2.2 for the following reasons: when the ratio of parts by mass of the organosilane coupling agent B to the aqueous polymer resin A is less than 0.6, i.e., when the amount of the aqueous polymer resin A is large, the corrosion resistance and solvent resistance of the dry film of the organic composite coating formed by surface treatment agent and steel substrate for enameling surface may be lowered; when the ratio of parts by mass of the organosilane coupling agent B to the aqueous polymer resin A is more than 2.2, i.e., when the amount of the aqueous polymer resin A is less, the dry film of organic composite coating formed by surface treatment agent and the surface of steel substrate for enameling has poor ductility, and the stamping formability of the enamel steel or part coated with the surface treatment agent may be deteriorated. In a preferred embodiment, the amount of the organosilane coupling agent B having at least one epoxy functional group is 45 to 55 parts by mass.

The polyol C containing at least three hydroxyl groups used in the technical solutions of the present invention accounts for 0.2 to 3 parts by mass for the following reasons: when the amount of the polyol C is less than 0.2 parts by mass, the stability of the surface treatment liquid system may be deteriorated, and the resistance of solvent and other chemical media of the film after film formation is lowered; when the amount of the polyol C is more than 3 parts by mass, the ductility and stamping formability of the formed film may be deteriorated.

Herein, as a polyhydroxy compound, the polyol C containing at least three hydroxyl groups can form a large amount of hydrogen bonds in the surface treatment agent system make the surface treatment agent system more stable, promote the crosslinking density of the organic composite coating formed by the surface treatment agent when applied to the surface of the steel substrate for enameling, and improve the resistance of the dry film of the organic composite coating to various chemical media.

Regarding the amount of the molybdenum compound D of the present invention, it is calculated in parts by mass of the elemental molybdenum, and the amount of the elemental molybdenum needs to be 0.05 to 2 parts by mass for the following reasons: when the amount of the elemental molybdenum is less than 0.05 parts by mass, the corrosion resistance of the dry film of organic composite coating formed by surface treatment agent and the surface of steel substrate for enameling may be lowered, and the corrosion of the surface of enamel steel may even be promoted; when the amount of the elemental molybdenum is more than 2 parts by mass, the adhesion of the dry film of organic composite coating may be deteriorated.

Herein, the molybdenum compound D may be water soluble and have oxidizability. The valence state of molybdenum in the molybdenum compound may be any valence in the range of +2 to +6. The molybdenum compound D may be derived from an oxide such as molybdenum trioxide, molybdenum dioxide or the like, or a molybdate compound such as sodium molybdate, ammonium molybdate or the like, or an organic compound of molybdenum, such as molybdenyl acetylacetonate, hexacarboxyl molybdenum or the like.

Regarding the amount of the phosphorus compound E of the present invention , it is calculated in parts by mass of the elemental phosphorus, and the amount of the elemental molybdenum needs to be 0.1 to 1 parts by mass for the following reasons: when the amount of the elemental phosphorus is less than 0.1 parts by mass, the corrosion resistance of the dry film of organic composite coating formed by surface treatment agent and the surface of steel substrate for enameling may be lowered; when the amount of the elemental phosphorus is more than 1 parts by mass, the adhesion of the dry film of organic composite coating may be deteriorated.

Herein, the elemental phosphorus of the phosphorus compound E can be provided by orthophosphoric acid, ammonium phosphate or other organic phosphates.

For the zirconium compound F of the present invention, the zirconium element thereof can be provided by the fluorine-containing zirconium compound. Therefore, when the amount of the zirconium compound F is calculated in parts by mass of the elemental zirconium, the amount of the elemental zirconium is control to be 0.1 to 1 parts by mass for the following reasons: when the amount of the elemental zirconium is less than 0.1 parts by mass, there is no effect of addition, and the adhesion of the dry film of organic composite coating formed by surface treatment agent and the surface of steel substrate for enameling may be deteriorated; when the amount of the elemental zirconium is more than 1 parts by mass, the stability of the surface treatment agent may be deteriorated, which may affect the quality of the surface treatment of the steel substrate for enameling.

The amount of the metal salt or organometallic compound G having a function of promoting adhesion of the present invention is controlled to be 0.5 to 8 parts by mass for the following reasons: when the amount of the metal salt or organometallic compound G having a function of promoting adhesion is less than 0.5 parts by mass, there is no effect of addition, the adhesion of enamel may be lowered; when the amount of the metal salt or organometallic compound G having a function of promoting adhesion is more than 8 parts by mass, the stability of the surface treatment agent may be deteriorated, which may induce rustiness on the surface of the steel substrate for enameling and affect the quality of the surface treatment of the steel substrate for enameling , and increase the production cost. In a preferred embodiment, the amount of the metal salt or organometallic compound G having a function of promoting adhesion is controlled to be 1 to 5 parts by mass.

Herein, the metal salt or organometallic compound G having a function of promoting adhesion is a metal salt or an organometallic compound which promotes the adhesion between the enamel layer and the steel substrate for enameling in the sintering process of the ceramic glaze layer. Therefore, the metal in the metal salt or organometallic compound G having a function of promoting adhesion is at least one of Cu, Ca, Ba, W, Mo, Fe, Sb, Co, Al, In, Zn, Ni, Ti, V, Sn, Ge, Mn, Sr, and Ga. For example, the metal salt or organometallic compound G may be at least one of a nitrate of iron, a nitrate of cobalt, a nitrate of nickel, a nitrate of copper, a nitrate of molybdenum, ferric acetate (Fe(CH₃CO₂)₂), cobaltous acetate (C₄H₆O₄Co·4H₂O), nickel oxalate (NiC₂O₄), nickel acetate (C₄HeO₄Ni·4H₂O) and copper acetate (Cu(CH₃CO₂)₂·H₂O). The metal salt or organometallic compound G having a function of promoting adhesion may include one or more metal salts or organometallic compounds, which may be salts and/or organic compounds of the same metal, or may be salts and/or organic compounds of different metals. The metal salt or organometallic compound G having a function of promoting adhesion may be uniformly dispersed or dissolved in the surface treatment agent as a powder or a solute.

Further, in a preferred embodiment, in order to enhance the dispersion or dissolution of the metal salt or organometallic compound G having a function of promoting adhesion, a water-soluble polymer resin A having a good compatibility may be used for matching, or 0.1 to 2 parts by mass of a dispersing agent may be added to improve the dispersion of the metal salt or organometallic compound G in the matrix of water-soluble polymer resin A, so that the metal salt or organometallic compound G having a function of promoting adhesion remains substantially stable in physical properties below 200 °C, without agglomeration or segregation in the surface treatment agent.

Herein, the metal salt or organometallic compound G having a function of promoting adhesion is a suitable adhesion promoter in the firing process of the ceramic glaze layer for the following reasons: the metal salt or organometallic compound G can be decomposed at low temperature and reduced by metal iron, which ensures the saturation concentration of iron oxide at the interface between the ceramic glaze layer and the steel substrate for enamel during the firing process, and creates favorable conditions for the adhesion of the enamel; meanwhile, the reduced metal in the metal salt or organometallic compound G is deposited on the interface between the ceramic glaze layer and the steel substrate for enameling, and forms a proper alloy phase with the metal iron, so that the enamel forms a good transition layer structure, thereby facilitating the adhesion of the ceramic glaze layer and the steel substrate for enameling .

Further, in the surface treatment agent for enamel steel or part according to the present invention, the aqueous polymer resin A is at least one selected from polyester, polyurethane, and polyacrylic acid.

Further, in the surface treatment agent for enamel steel or part according to the present invention, the polyol has a boiling point of 120~320 °C.

Further, in the surface treatment agent for enamel steel or part according to the present invention, the zirconium compound F is a fluorine-containing zirconium compound.

Further, in the surface treatment agent for enamel steel or part according to the present invention, the metal in the metal salt or organometallic compound G is at least one selected from Cu, Ca, Ba, W, Mo, Fe, Sb, Co, Al, In, Zn, Ni, Ti, V, Sn, Ge, Mn, Sr, and Ga.

Further, in the surface treatment agent for enamel steel or part according to the present invention, the metal salt or organometallic compound G is at least one selected from a nitrate of iron, a nitrate of cobalt, a nitrate of nickel, a nitrate of copper, a nitrate of molybdenum, ferric acetate (Fe(CH₃CO₂)₂), cobaltous acetate (C₄H₆O₄Co·4H₂O), nickel oxalate (NiC₂O₄), nickel acetate (C₄H₆O₄Ni·4H₂O) and copper acetate (Cu(CH₃CO₂)₂·H₂O).

Another object of the present invention is to provide enamel steel, which has good performance parameters and good resistance to various chemical media, i.e., excellent alkali-washing resistance and solvent resistance. Besides, the enamel steel can be subjected to molding without lubricating oil and anti-rust oil, and the steel substrate for enamel has high adhesion to the enamel layer interface when it is made into an enamel steel product.

In order to achieve the above object, the present invention proposes an enamel steel, wherein, the surface thereof has an organic composite coating formed by coating the surface with the surface treatment agent as described above; and there is a transition layer between the enamel steel and the organic composite coating, the transition layer is formed by metal iron and the reduced metal from the metal salt or organometallic compound G, wherein the metal salt or organometallic compound G is at least one selected from: a nitrate of cobalt, a nitrate of nickel, a nitrate of copper, cobaltous acetate, nickel oxalate, nickel acetate and copper acetate.

Further, in the enamel steel according to the present invention, the organic composite coating has a dry film thickness of 100 nm to 8 µm. The design principle of controlling the thickness of the dry film of the organic composite coating to 100 nm to 8 µm is: when the dry film thickness of of the organic composite coating is less than 100 nm, the dry film of the organic composite coating is relatively thin, which may result in decreases in stamping formability and corrosion resistance; when the thickness of the dry film of the organic composite coating is more than 8 µm, the organic components in the dry film of the organic composite coating may fail to completely decompose during the firing process of enamel, and a large amount of bubbles may be generated in the organic composite coating, which adversely affect the adhesion at the interface between the enamel layer and the steel substrate for enameling , as well as the surface quality of the enamel layer; besides, a dry film of the organic composite coating of more than 8 µm also increases the surface treatment cost per unit area of the enamel steel.

Further, the organic composite coating in the enamel steel according to the present invention has a dry film thickness of 300 nm to 2 µm.

Another object of the present invention is to provide an enamel steel product, comprising the enamel steel as described above. The enamel steel product is made of enamel steel plate having an organic composite coating formed by surface treatment agent coating. The enamel steel product has excellent processability, good water permeability resistance and wet and hot corrosion resistance, and good resistance to various chemical media, i.e., excellent alkali-washing resistance and solvent resistance. Since an organic composite coating is formed after applying the surface treatment agent, the part has a low friction coefficient and high ductility, so that the lubricating oil and the anti-rust oil can be eliminated in the molding process, and thereby the process flow can be simplified.

In order to achieve the above object, the present invention proposes an enamel steel product, which is made of any of the enamel steel as described above.

Another object of the present invention is to provide a manufacturing method for the enamel steel product. The enamel steel product produced by the method can be molded without lubricating oil and anti-rust oil. Moreover, the enamel steel product manufactured by the method further reduces the thickness of the enamel layer than the prior art, and it is superior to the enamel steel product prepared by the conventional techniques while maintaining high adhesion to the steel substrate for enameling and low surface pinhole incidence.

In order to achieve the above object, the present invention provides a manufacturing method for any one of the enamel steel product as described above. The method comprises coating the surface treatment agent on a steel substrate for enameling by coil coating, dip-coating or spray coating, and curing the surface treatment agent at a temperature of 100~180 °C to obtain an organic composite coating thereof.

The steel substrate for enameling used in the present invention can be a steel grade of DC01EK and above as specified in GB/T 13790-2008. The size, shape, and the like of the steel substrate for enamel are not particularly limited in the present invention. According to the national standard GB/T 13790-2008 of the People's Republic of China, the chemical composition of steel in steel plate for enamel or part is defined as the following mass percentage: C≤0.08%, Mn≤0.6%, P≤0.045%, S≤0.045%, and Al≥0.015%, so as to avoid the generation of bubbles in the firing process of ceramic glaze layer, which have negative impacts on the adhesion at the interface between the enamel layer and the steel substrate for enameling , and even affect the mechanical properties of the enamel steel product. The methods of coating the surface treatment agent on the steel substrate for enamel include coil coating, dip-coating or spray coating, and the surface treatment agent may be coated to one side or both sides of the steel substrate for enameling. The surface treatment agent is cured at a temperature of 100~180 °C for the following reasons: the solvent water and the water-soluble additives having low boiling point in the surface treatment agent can be volatilized at a temperature of 100~180 °C, and the crosslinking reaction of the aqueous polymer resin A and the organosilane coupling agent B having at least one epoxy functional group can be promoted; when the curing temperature is lower than 100 °C, the crosslinking of the dry film of the organic composite coating formed by the surface treatment agent and the surface of the steel substrate for enameling for insufficient, which may result in deterioration of various properties; when the curing temperature is higher than 180 °C, the properties of some components in the surface treatment agent may change, which adversely affects the dry film of the organic composite coating.

The present invention has no particular limitation on the curing method of the surface treatment agent. Those skilled in the art can employ different curing methods including hot air heating, induction heating, infrared heating, and the like. Another object of the present invention is to provide a manufacturing method for an enamel steel product. The manufacturing method can process the enamel steel according to the present invention without lubricating oil and anti-rust oil. The enamel steel manufactured by the method has good resistance to various chemical media, such as alkali-washing resistance and solvent resistance, that is, it has good resistance to alkaline- or solvent-based degreasing processes. Moreover, the method reduces the thickness of the enamel layer, and thereby the consumption of the ceramic glaze material of enamel is saved while good interface adhesion between the enamel layer and the steel substrate for enameling is maintained. The method also improves surface defects of enamel layers in the prior art such as surface pinholes, black specks and fish eyes.

In order to achieve the above object, the present invention provides a manufacturing method for an enamel steel product, further comprising the steps of:
(1) degreasing, cleaning and drying to remove surface contaminants;
(2) applying a ceramic glaze layer and firing.

In the above technical solution, the ceramic glaze layer in the step (2) of the manufacturing method of the present invention may be a powdery alkali-boron-silicate substance in glassy state, which may include mineral raw materials, chemical materials, and color raw materials. The mass percentage of mineral raw materials (e.g. quartz (main component is silica-SiO₂), feldspar (alkaline or alkaline earth metal silicate, commonly used: potassium feldspar-K₂O·Al₂O₃·6SiO₂) and clay (aqueous aluminum-silicon salt minerals, mainly Al₂O₃·6SiO₂ and crystal water)) in the total amount of ceramic glaze layer may be 40~60%; the mass percentage of chemical materials (e.g. borax (Na₂B₄O₇·10H₂O), sodium nitrate (NaNO₃), sodium carbonate (Na₂CO₃), lithium carbonate (Li₂CO₃), calcium carbonate (CaCO₃), magnesium oxide (MgO), zinc oxide (ZnO), titanium dioxide (TiO₂), bismuth oxide (Sb₂O₃), zirconium dioxide (ZrO₂), cobalt oxide (CoO), nickel oxide (NiO), manganese dioxide (MnO₂) and iron oxide (Fe₂O₃)) in the total amount of ceramic glaze layer may be 30~50%; the mass percentage of color raw materials (e.g. cobaltous oxide (bright blue), copper oxide (green or red), chromic oxide (dark green), ferric oxide (ember)) in the total amount of ceramic glaze layer may be 0.1~2.5%.

The present invention has no particular limitation on the method of applying the ceramic glaze layer in the step (2) of the manufacturing method, and dry electrostatic powder spraying may be used, or the ceramic glaze slurry may be applied by spray coating or dip-coating to a steel plate having an organic composite coating on the surface.

When the ceramic glaze slurry of the ceramic glaze layer is applied by wet or semi-wet (i.e., the ceramic glaze slurry is applied by spraying or dipping to a steel plate having an organic composite coating on the surface), it needs to be cured at a curing temperature to ensure that the water or solvent in the ceramic glaze slurry is completely volatilized. In the firing process, when the ceramic glaze layer is not completely dried, the volatilization of water or solvent during the firing process may adversely affect the adhesion of the interface between the enamel layer and the steel substrate for enameling and the surface quality of the enamel layer.

The present invention has no particular limitation on the curing method. Those skilled in the art can use curing methods including hot air heating, induction heating, infrared heating, and the like.

Further, in the step (2) of the manufacturing method for an enamel steel product according to the present invention, the firing temperature is 600 °C or more.

In the firing process of the enamel steel product, before the interface temperature between the ceramic glaze layer and the steel substrate for enamel reaches 450 °C, 90% or more of the metal salt or organometallic compound G in the organic composite coating formed by coating the steel substrate for enameling with the surface treatment agent should be completely decomposed, and the carbon residue of the aqueous polymer resin A should be less than 15% for the following reasons: when the firing temperature exceeds 250 °C, lost on ignition of the aqueous polymer resin A starts, and the metal salt or organometallic compound G also begins to decompose and is reduced by metal iron or forms a proper alloy phase with the metal iron, which ensures the saturation concentration of the iron oxide in the interface between the ceramic glaze layer and the steel substrate for enameling during the firing process; the ceramic glaze layer is a glassy structure with no fixed melting point, and generally begins to melt and soften at 475 °C or higher; therefore, at 475 °C or higher, gas generated during the decomposition of the metal salt or organometallic compound G and the aqueous polymer resin A is released and embedded in the ceramic glaze layer having fluidity, resulting in a large amount of bubbles in the enamel layer formed in the firing process, which adversely affects the adhesion of the interface between the enamel layer and the steel substrate for enameling and the surface quality of the enamel layer.

In the firing process of the enamel steel product, before the interface temperature between the ceramic glaze layer and the steel substrate for enamel reaches 600 °C, the metal salt or organometallic compound G in the organic composite coating should be completely decomposed, and the residue amount of the aqueous polymer resin should be less than 0.5%, for the following reasons: when the firing temperature reaches 600 °C or higher, the viscosity of the ceramic glaze layer gradually decreases, the fluidity increases, the ceramic glaze layer begins to spread on the interface between the ceramic glaze layer and the steel substrate for enamel, and the enamel layer gradually changed from a porous film to a continuous film, thereby the gas generated at the interface between the ceramic glaze layer and the steel substrate for enamel could not be smoothly released into the air, which adversely affects the adhesion of the interface between the enamel layer and the steel substrate for enameling and the surface quality of the enamel layer.

In the firing process of the enamel steel product, when the interface temperature between the ceramic glaze layer and the steel substrate for enamel reaches 600 °C or higher, the ceramic glaze layer begins to spread out. Generally, the firing temperature of the enamel is 150~300 °C higher than the spreading temperature, so that the metal salt or organometallic compound G is uniformly dispersed or dissolved in the organic composite coating. The metal produced by the decomposition is reduced by metal iron or forms an appropriate alloy phase with the metal iron at the interface between the ceramic glaze layer and the steel substrate for enameling for, which ensures saturation concentration and uniform distribution of the iron oxide in the interface between the ceramic glaze layer and the steel substrate for enameling during the firing process, and promotes the dissolution and diffusion of metal iron and iron oxide. The saturation concentration and uniform distribution of the iron oxide in the interface between the ceramic glaze layer and the steel substrate for enameling can improve the wetting of the interface between the ceramic glaze layer and the steel substrate for enameling, and reduce the contact angle of the interface between the ceramic glaze layer and the steel substrate for enameling, thereby controlling the oxidation conditions of the interface between the ceramic glaze layer and the steel enamel substrate.

In a preferred embodiment, the enamel steel product manufactured by the manufacturing method of the present invention has no surface defects such as black specks and fish eyes on the surface of the enamel layer even when the thickness of the enamel layer is reduced from 150 µm to 75 µm. Besides, according to the ISO 8289 standard test, the incidence of surface pinholes of the enamel steel product is less than 20 holes/m².

Further, a step of processing the steel plate into a part is further comprised between the step of curing the surface treatment agent and the step (1) of the manufacturing method of the present invention.

Another object of the present invention is to provide a manufacturing method for an enamel steel product. The manufacturing method can mold the enamel steel according to the present invention without lubricating oil and anti-rust oil. The enamel steel manufactured by the method has good resistance to various chemical media, such as alkali-washing resistance and solvent resistance, that is, it has good resistance to alkaline- or solvent-based degreasing processes. Moreover, the method reduces the thickness of the enamel layer, thereby saving the consumption of the ceramic glaze material of enamel while maintaining good interface adhesion between the enamel layer and the steel substrate for enameling. The method also improves surface defects of enamel layers in the prior art such as surface pinholes, black specks and fish eyes.

Further disclosed, however not according to the invention is an enamel steel product which is produced by the above-described manufacturing method for an enamel steel product.

The organic composite coating on the surface of the enamel steel or part coated with the surface treatment agent for enamel steel or part has good water permeability resistance as well as wet and hot corrosion resistance.

In addition, the organic composite coating on the surface of the enamel steel or part coated with the surface treatment agent for enamel steel or part has an anticorrosive effect, which is equivalent to the effect of anti-rust oil used for the cold rolled steel plate. Thus, the enamel steel or part can be subjected to long transportation or storage without the protection of anti-rust oil.

In addition, the organic composite coating on the surface of the enamel steel or part coated with the surface treatment agent for enamel steel or part according to the present invention has low coefficient of friction and high ductility, so that the enamel steel or part can be subjected to a molding operation without lubricating oil, for example, when the part is obtained by deep drawing or stamping, the organic composite coating will not be damaged.

In addition, the organic composite coating on the surface of the enamel steel or part coated with the surface treatment agent for enamel steel or part according to the present invention has good electrical conductivity and weldability, which allows the enamel steel or part of the present invention to be joined by fusion welding or pressure welding in the presence of the organic composite coating.

In addition, the organic composite coating on the surface of the enamel steel or part coated with the surface treatment agent for enamel steel or part according to the present invention has good resistance such as alkali-washing resistance, solvent resistance, etc., so that when the surface of the enamel steel or part is fouled by oil stains after transportation, carrying or molding process, common alkaline degreasers or solvents such as alcohol can be used to quickly remove oil stains on the surface without damaging the dry film of the organic composite coating.

The enamel steel product of the present invention has high interface adhesion performance, which is comparable to that of a chemically post-treated steel plate or part (for example, a nickel-plated steel plate), saves the adhesive content in ceramic glaze material, and reduces the pollution and energy consumption of surface treatment process.

The surface treatment agent for enamel steel according to the present invention has excellent processability and promotes the adhesion performance of the enamel. In addition, the organic composite coating formed on the surface of the enamel steel or part has good water permeability resistance as well as wet and hot corrosion resistance, and has good resistance to various chemical media, such as alkali-washing resistance and solvent resistance. The organic composite coating has characteristics of low friction coefficient and high ductility, so that the lubricating oil can be eliminated in the molding process, thereby simplifying the production process of the enamel steel or part.

The manufacturing method for an enamel steel product of the present invention saves the consumption of ceramic glaze material by reducing the thickness of the enamel layer, while maintaining good interface adhesion of the enamel layer as well as improving surface defects of the enamel layer such as surface pinholes, black specks and fish eyes.

### Detailed Description

The surface treating agent, the enamel steel and part coated with the surface treatment agent of the present invention will be further explained and illustrated in conjunction with the specific Examples. However, the explanations and illustrations do not unduly limit the technical solutions of the present invention.

### Examples 1-37 and Comparative Examples 1-8

The enamel steel products of Examples 1-37 and Comparative Examples 1-8 were obtained by the following steps:
(1) the surface treatment agent according to the formulations in Table 1 was uniformly coated by roll coating on a steel substrate for enameling; the steel substrate for enameling was a 0.8 mm steel plate of steel grade DC04ED (also known as BTC4D, i.e., a steel grade suitable for enamel and deep drawing according to GB/T 13790-2008)
(2) the surface treatment agent of the step (1) was cured at a temperature of 100~180 °C for 30 s to obtain a steel plate with an organic composite coating on the surface; and the weight of the dry film of the organic composite coating was in a range of 0.6~1.0 g/m² by controlling the coating pressure and the amount of the surface treating agent, and the specific parameters are shown in Table 2.
(3) the surface of the steel substrate for enameling was sprayed and cleaned with a medium alkalinity degreaser (pH: 11~12), and then washed with pure water to remove the alkaline component remaining on the surface, and dried.
(4) a ceramic glaze layer was applied and fired: a conventional ceramic glaze having the designation of AMSP-001279 manufactured by Colorobbia was uniformly applied to the side of the steel substrate for enameling coated with the surface treatment agent, and the firing temperature was 600 °C or higher.

The enamel steels of Examples 1-37 and Comparative Examples 1-8 were naturally cooled to room temperature. Enamel steel plates having two different ceramic glaze thicknesses of 70±15 µm and 150±15 µm were obtained according to different ceramic glaze application amounts.

Table 1 lists the parts by mass of each solid component in the surface treatment agent used in the enamel steel products of Examples 1-37 and Comparative Examples 1-8.

**Table 1.**

| Number | Aqueous polymer resin A | | Organosilane coupling agent B having at least one epoxy functional group | | Ratio of parts by mass of the organosilane coupling agent B to the aqueous polymer resin A | Polyol C containing at least three hydroxyl groups | | Molybdenum compound D | | Phosphorus compound E | | Zirconium compound F | | Metal salt or organometallic compound G having a function of promoting adhesion | |
|---|---|---|---|---|---|---|---|---|---|---|---|---|---|---|---|
| | Type | Parts by mass | Type | Parts by mass | | Type | Parts by mass | Type | Parts by mass | Type | Parts by mass | Type | Parts by mass | Type | Parts by mass |
| Example 1 | A1 | 35 | B1 | 55 | 1.57 | C1 | 0.2 | D1 | 0.05 | E1 | 0.1 | F1 | 0.1 | G1 | 8.0 |
| Example 2 | A1 | 35 | B1 | 55 | 1.57 | C1 | 0.3 | D1 | 0.2 | E1 | 0.3 | F1 | 0.2 | G2 | 7.0 |
| Example 3 | A1 | 35 | B1 | 55 | 1.57 | C1 | 0.5 | D1 | 0.2 | E1 | 0.2 | F1 | 0.4 | G3 | 6.0 |
| Example 4 | A1 | 35 | B1 | 55 | 1.57 | C1 | 0.8 | D1 | 0.6 | E1 | 0.4 | F1 | 0.3 | G4 | 5.0 |
| Example 5 | A1 | 40 | B1 | 50 | 1.25 | C1 | 0.9 | D1 | 0.7 | E1 | 0.5 | F1 | 0.8 | G1 | 3.0 |
| Example 6 | A1 | 40 | B1 | 50 | 1.25 | C2 | 1.2 | D1 | 0.9 | E1 | 0.6 | F1 | 0.8 | G2 | 3.0 |
| Example 7 | A1 | 40 | B1 | 50 | 1.25 | C2 | 1.0 | D1 | 1.2 | E1 | 0.8 | F1 | 0.5 | G3 | 3.8 |
| Example 8 | A1 | 40 | B1 | 50 | 1.25 | C2 | 0.5 | D1 | 1 | E1 | 0.5 | F1 | 0.3 | G4 | 2.8 |
| Example 9 | A1 | 45 | B1 | 45 | 1 | C2 | 1.5 | D1 | 1.8 | E1 | 0.2 | F1 | 0.8 | G1 | 1.8 |
| Example 10 | A1 | 45 | B1 | 45 | 1 | C1 | 2.0 | D1 | 0.5 | E1 | 0.8 | F1 | 0.3 | G2 | 2.0 |
| Example 11 | A1 | 45 | B1 | 45 | 1 | C1 | 2.5 | D1 | 1 | E1 | 0.5 | F1 | 0.2 | G3 | 2.8 |
| Example 12 | A1 | 45 | B1 | 45 | 1 | C1 | 0.5 | D1 | 1 | E1 | 0.5 | F1 | 0.2 | G4 | 2.8 |
| Example 13 | A1 | 35 | B1 | 55 | 1.57 | C1 | 0.5 | D2 | 1.5 | E2 | 0.8 | F2 | 0.4 | G2 | 2.8 |
| Example 14 | A1 | 35 | B1 | 55 | 1.57 | C2 | 0.8 | D2 | 0.8 | E2 | 0.8 | F2 | 0.5 | G2 | 2.0 |
| Example 15 | A1 | 35 | B1 | 55 | 1.57 | C2 | 1.8 | D2 | 0.1 | E2 | 0.5 | F2 | 0.5 | G3 | 5 |
| Example 16 | A1 | 40 | B1 | 50 | 1.25 | C2 | 2.0 | D2 | 0.5 | E2 | 0.5 | F2 | 0.6 | G1 | 3.0 |
| Example 17 | A1 | 40 | B1 | 50 | 1.25 | C2 | 0.5 | D2 | 0.5 | E2 | 0.8 | F2 | 0.6 | G2 | 2.8 |
| Example 18 | A1 | 40 | B1 | 50 | 1.25 | C2 | 1.5 | D2 | 0.8 | E2 | 0.5 | F2 | 0.4 | G3 | 5.0 |
| Example 19 | A1 | 45 | B1 | 45 | 1 | C1 | 0.5 | D2 | 0.7 | E2 | 0.5 | F2 | 0.8 | G1 | 3.8 |
| Example 20 | A1 | 35 | B2 | 55 | 1.57 | C1 | 0.2 | D1 | 0.8 | E1 | 1.0 | F1 | 0.7 | G2 | 4.2 |
| Example 21 | A1 | 40 | B2 | 50 | 1.25 | C1 | 0.2 | D1 | 0.3 | E1 | 0.2 | F1 | 0.2 | G3 | 7.8 |
| Example 22 | A1 | 45 | B2 | 45 | 1 | C1 | 0.5 | D1 | 1 | E1 | 0.5 | F1 | 0.2 | G4 | 6.5 |
| Example 23 | A1 | 35 | B2 | 55 | 1.57 | C1 | 0.3 | D2 | 0.8 | E2 | 0.6 | F2 | 0.5 | G1 | 5 |
| Example 24 | A1 | 40 | B2 | 50 | 1.25 | C1 | 0.3 | D2 | 0.5 | E2 | 0.8 | F2 | 0.4 | G2 | 3 |
| Example 25 | A1 | 45 | B2 | 45 | 1 | C1 | 0.3 | D2 | 0.5 | E2 | 0.8 | F2 | 0.4 | G3 | 3 |
| Example 26 | A2 | 35 | B1 | 55 | 1.57 | C1 | 0.7 | D1 | 1 | E1 | 0.5 | F1 | 0.2 | G4 | 3 |
| Example 27 | A2 | 40 | B1 | 50 | 1.25 | C1 | 0.08 | D1 | 1 | E1 | 0.5 | F1 | 08 | G1 | 3 |
| Example 28 | A2 | 45 | B1 | 45 | 1 | C2 | 1 | D1 | 1 | E1 | 0.5 | F1 | 0.2 | G2 | 3.3 |
| Example 29 | A2 | 35 | B1 | 55 | 1.57 | C2 | 0.3 | D2 | 0.5 | E2 | 0.8 | F2 | 0.4 | G3 | 3 |
| Example 30 | A2 | 40 | B1 | 50 | 1.25 | C2 | 0.6 | D2 | 0.5 | E2 | 0.8 | F2 | 0.4 | G4 | 3 |
| Example 31 | A2 | 45 | B1 | 45 | 1 | C2 | 1.3 | D2 | 0.5 | E2 | 0.8 | F2 | 0.4 | G1 | 3 |
| Example 32 | A2 | 35 | B2 | 55 | 1.57 | C2 | 1 | D1 | 1 | E1 | 0.5 | F1 | 0.2 | G1 | 2.3 |
| Example 33 | A2 | 40 | B2 | 50 | 1.25 | C1 | 1.5 | D1 | 0.8 | E1 | 0.5 | F1 | 0.8 | G2 | 3 |
| Example 34 | A2 | 45 | B2 | 45 | 1 | C1 | 2.3 | D1 | 1.0 | E1 | 0.5 | F1 | 0.2 | G2 | 3 |
| Example 35 | A2 | 35 | B2 | 55 | 1.57 | C1 | 2.0 | D2 | 1.2 | E2 | 0.8 | F2 | 0.4 | G2 | 3 |
| Example 36 | A2 | 40 | B2 | 50 | 1.25 | C1 | 0.3 | D2 | 0.5 | E2 | 0.8 | F2 | 0.4 | G2 | 2.3 |
| Example 37 | A2 | 45 | B2 | 45 | 1 | C1 | 0.3 | D2 | 0.8 | E2 | 0.4 | F2 | 0.8 | G2 | 3 |
| Comparative Example 1 | A1 | ***90*** | - | - | - | - | - | - | - | - | - | - | - | G1 | 3 |
| Comparative Example 2 | A1 | ***90*** | - | - | - | - | - | - | - | - | - | - | - | G2 | 3 |
| Comparative Example 3 | A1 | ***90*** | - | - | - | - | - | - | - | - | - | - | - | G3 | 3 |
| Comparative Example 4 | A1 | ***90*** | - | - | - | - | - | - | - | - | - | - | - | G4 | 3 |
| Comparative Example 5 | A2 | ***90*** | - | - | - | - | - | - | - | - | - | - | - | G1 | 3 |
| Comparative Example 6 | A2 | ***90*** | - | - | - | - | - | - | - | - | - | - | - | G2 | 3 |
| Comparative Example 7 | A2 | ***90*** | - | - | - | - | - | - | - | - | - | - | - | G3 | 3 |
| Comparative Example 8 | A2 | ***90*** | - | - | - | - | - | - | - | - | - | - | - | G4 | 3 |

| | | | | | | | | | | | | | | | |
|---|---|---|---|---|---|---|---|---|---|---|---|---|---|---|---|
| *Note: A1 is an aqueous polyurethane resin, and A2 is an aqueous acrylic resin; B1 is glycidoxypropyltrimethoxysilane, and B2 is aminoethylaminopropyltrimethoxysilane; C1 is 2-hydroxymethane-2-methyl-1,3 propanediol, and C2 is pentaerythritol; D1 is ammonium molybdate, and D2 is molybdenum nitrate; E1 is phosphoric acid, and E2 is ammonium phosphate; F1 is fluorozirconic acid, and F2 is ammonium fluorozirconate; G1 is cobalt nitrate, G2 is nickel nitrate, G3 is cobalt acetate, and G4 is nickel acetate. | | | | | | | | | | | | | | | |

Table 2 lists the specific parameters of the enamel steel products of Examples 1-37 and Comparative Example 1-8 when curing the dry film of the organic composite coating.

**Table 2.**

| Number | Curing temperature (°C) | Thickness (µm) of the dry film of organic composite coating |
|---|---|---|
| Example 1 | 100 | 0.65 |
| Example 2 | 120 | 0.78 |
| Example 3 | 120 | 0.82 |
| Example 4 | 110 | 0.62 |
| Example 5 | 110 | 0.76 |
| Example 6 | 180 | 0.88 |
| Example 7 | 120 | 0.67 |
| Example 8 | 100 | 0.65 |
| Example 9 | 100 | 0.77 |
| Example 10 | 150 | 0.73 |
| Example 11 | 100 | 0.66 |
| Example 12 | 100 | 0.75 |
| Example 13 | 100 | 0.65 |
| Example 14 | 135 | 0.8 |
| Example 15 | 100 | 0.73 |
| Example 16 | 100 | 0.71 |
| Example 17 | 120 | 0.65 |
| Example 18 | 140 | 0.69 |
| Example 19 | 160 | 0.74 |
| Example 20 | 100 | 0.78 |
| Example 21 | 100 | 0.73 |
| Example 22 | 100 | 0.8 |
| Example 23 | 110 | 0.81 |
| Example 24 | 100 | 0.77 |
| Example 25 | 100 | 0.68 |
| Example 26 | 120 | 0.81 |
| Example 27 | 100 | 0.75 |
| Example 28 | 100 | 0.65 |
| Example 29 | 110 | 0.69 |
| Example 30 | 130 | 0.76 |
| Example 31 | 160 | 0.85 |
| Example 32 | 130 | 0.89 |
| Example 33 | 180 | 0.91 |
| Example 34 | 110 | 0.74 |
| Example 35 | 120 | 0.71 |
| Example 36 | 100 | 0.64 |
| Example 37 | 100 | 0.65 |
| Comparative Example 1 | 100 | 0.69 |
| Comparative Example 2 | 100 | 0.71 |
| Comparative Example 3 | 100 | 0.83 |
| Comparative Example 4 | 100 | 0.81 |
| Comparative Example 5 | 100 | 0.65 |
| Comparative Example 6 | 100 | 0.67 |
| Comparative Example 7 | 100 | 0.66 |
| Comparative Example 8 | 100 | 0.73 |

The surface-pretreated enamel steel of the above Examples 1-37 and Comparative Examples 1-8 were sampled and tested according to the following test methods, and the obtained test data of evaluating each performance was shown in Table 3. Wherein, the test for evaluating each performance parameter is as follows:
1) Stamping formability:
   Samples were prepared using the draw bead method. Experimental conditions: the pressure under the bead was fixed to 3 KN, the diameter of the indenter was 9.6 mm, and the drawing speed was 200 mm/min. Evaluation standard:
   ⊚: No change in appearance
   ○: A small amount of scratches on the appearance
   Δ: More obvious scratches on the appearance
   ×: Overall abrasion on the appearance
2) Alkali-washing resistance:
   1. Alkali-washing resistance of the plate
      Samples were cleaned with a medium alkalinity degreaser (pH: 11~12) and sprayed at 50 °C for 3 minutes. After the cleaning, the surface of the sample was rubbed back and forth 20 times with fine gauze. Evaluation standard:
      ⊚: No change in appearance
      ○: Slight trace of wiping on the appearance
      Δ: Obvious white on the appearance or substrate exposes for some film
      ×: Film on the appearance completely falls off
   2. Alkali-washing resistance after molding:
      After the 8mm cupping test using the Eriksson cupping tester, samples were cleaned with a medium alkalinity degreaser (pH: 11~12) and sprayed at 50 °C for 3 minutes. After the cleaning, the cupping surfaces of the samples were rubbed back and forth 20 times with fine gauze. Evaluation of appearance:
      ⊚: No change in appearance
      ○: Slight trace of wiping on the appearance
      Δ: Obvious white on the appearance or substrate exposes for some film
      ×: Film on the appearance completely falls off
   3. Solvent resistance:
      The surface of the steel plate was wiped back and forth 30 times with a fine gauze dipped in 80% ethanol, and rubbed back and forth 20 times with a gauze dipped in MEK. Evaluation of appearance:
      ⊚: No change in appearance
      ○: Slight trace of wiping on the appearance
      Δ: Obvious white on the appearance or substrate exposes for some film
      ×: Film on the appearance completely falls off

Table 3 lists the tested performance parameters of the enamel steel coated with the surface treatment agents of Examples 1-37 and Comparative Examples 1-8.

**Table 3.**

| Number | Performance parameters | | | |
|---|---|---|---|---|
| | Stamping formability | Alkali-washing resistance | | Solvent resistance |
| | | Alkali-washing resistance of the plate | Alkali-washing resistance after molding | |
| Example 1 | ⊚ | ⊚ | ⊚ | ⊚ |
| Example 2 | ⊚ | ⊚ | ⊚ | ⊚ |
| Example 3 | ⊚ | ⊚ | ⊚ | ⊚ |
| Example 4 | ⊚ | ⊚ | ⊚ | ⊚ |
| Example 5 | ○ | ⊚ | ⊚ | ⊚ |
| Example 6 | ○ | ⊚ | ⊚ | ⊚ |
| Example 7 | ○ | ⊚ | ⊚ | ⊚ |
| Example 8 | ○ | ⊚ | ⊚ | ⊚ |
| Example 9 | ○ | ⊚ | ○ | ○ |
| Example 10 | ○ | ⊚ | ○ | ○ |
| Example 11 | ○ | ⊚ | ○ | ○ |
| Example 12 | ○ | ⊚ | ○ | ○ |
| Example 13 | ⊚ | ⊚ | ⊚ | ⊚ |
| Example 14 | ⊚ | ⊚ | ⊚ | ⊚ |
| Example 15 | ⊚ | ⊚ | ⊚ | ⊚ |
| Example 16 | ⊚ | ⊚ | ⊚ | ⊚ |
| Example 17 | ○ | ⊚ | ⊚ | ○ |
| Example 18 | ○ | ⊚ | ⊚ | ⊚ |
| Example 19 | ○ | ⊚ | ○ | ⊚ |
| Example 20 | ○ | ⊚ | ⊚ | ⊚ |
| Example 21 | ⊚ | ⊚ | ⊚ | ⊚ |
| Example 22 | ○ | ⊚ | ○ | ○ |
| Example 23 | ⊚ | ⊚ | ⊚ | ○ |
| Example 24 | ○ | ⊚ | ○ | ⊚ |
| Example 25 | ⊚ | ⊚ | ○ | ⊚ |
| Example 26 | ○ | ○ | ○ | ⊚ |
| Example 27 | ⊚ | ○ | ○ | ⊚ |
| Example 28 | ○ | ○ | ⊚ | ⊚ |
| Example 29 | ⊚ | ⊚ | ○ | ○ |
| Example 30 | ○ | ⊚ | ○ | ○ |
| Example 31 | ⊚ | ○ | ⊚ | ⊚ |
| Example 32 | ○ | ○ | ○ | ⊚ |
| Example 33 | ○ | ⊚ | ○ | ○ |
| Example 34 | ○ | ○ | ○ | ⊚ |
| Example 35 | ⊚ | ○ | ○ | ⊚ |
| Example 36 | ⊚ | ⊚ | ○ | ⊚ |
| Example 37 | ○ | ○ | ○ | ○ |
| Comparative Example 1 | ○ | Δ | × | Δ |
| Comparative Example 2 | ○ | Δ | × | Δ |
| Comparative Example 3 | ○ | Δ | Δ | × |
| Comparative Example 4 | ○ | Δ | Δ | × |
| Comparative Example 5 | Δ | × | × | Δ |
| Comparative Example 6 | Δ | × | × | Δ |
| Comparative Example 7 | Δ | × | × | × |
| Comparative Example 8 | Δ | × | × | × |

As can be seen from Table 3, all evaluation results of the enamel steels coated with the surface treatment agent comprising the components of the present invention of Examples 1-37 after the above tests were "⊚" and "○", indicating that all the steels for enamel coated with the surface treatment agent have excellent or good stamping formability, alkali-washing resistance (alkali-washing resistance of the plate and alkali-washing resistance after molding), and solvent resistance.

The enamel steels in the above Examples 1-37 and Comparative Examples 1-8 were sampled, and then a ceramic glaze layer was applied and fired, and then the properties of the enamel layer were tested. The test was carried out in the following manner, and the obtained test data for evaluating each performance was listed in Table 4. Wherein, the test for evaluating each performance parameter is as follows:
1) Impact hammer test on the adhesion of enamel layer:
   Impact hammer test was carried out on the samples of the fired enamel steel products: the weight of the impact hammer was 1.5 kg, hemispherical, 22 mm in diameter, the diameter of the hole on the impact base was 20.6 mm, and the punch radius was 2 mm. The surface of the enamel steel product sample was cleaned and then fixed between the base of the impact sample stage and the support frame, and the impact hammer was placed at a height of 500 mm to impact the surface of the enamel steel product sample.
   After the ceramic explosion after the impact is completely stopped, the adhesion strength level of the enamel layer of the enamel steel product sample is evaluated. Evaluation standard:
      1: The surface after impact is completely covered by the enamel layer and has a shiny appearance.
      2: The surface after impact is almost completely covered by the enamel layer (under the adhesion layer).
      3: Most of the enamel layer is attached after the impact, and a small amount of iron is exposed.
      4: A small part of the enamel layer is attached after the impact, and a large amount of iron is exposed.
      5: After the impact, all the enamel is removed, and the separation of the enamel layer and the metal layer is very clear.
2) Test for surface pinhole rate of enamel layer:
   Detection of defects using optical methods based on color effects: Test solution: 3.0 g ± 0.1 g of sodium nitrite was dissolved in 100 ml of deionized water, and 4 ml of a phenolphthalein ethanol solution (the mass ratio of phenolphthalein was 0.5%) was added. Power source: DC voltage of 24V ± 4V; test electrode: wet kitchen paper with an area of at least 500cm².

The metal part of the enamel steel product sample not coated with enamel layer was connected to the negative electrode of the power source, and the test electrode (i.e. the wet paper electrode) was connected to the positive electrode of the power source. The test electrode was saturated with the test solution, and the electrode was placed over the test area and no air was allowed to enter the area. The power was turned on, and then the power was turned off after 2 minutes. The number of defects was counted within 1 minute of turning off the power. Each defect was shown as a small red dot on the test electrode. The number of defects per square meter was calculated.

Evaluation standard for surface pinhole rate of enamel layer
⊚: holes/m²≤ 10
○: 10 <holes/m²≤ 20
Δ: 20 <holes/m²≤ 50
×: 50 <holes/m²

**Table 4.**

| | Performances of enamel layer after firing | | | |
|---|---|---|---|---|
| | Adhesion performance of enamel layer | | Surface pinhole rate of enamel layer | |
| | Enamel thickness 1(70±15µm) | Enamel thickness 2 (150±15µm) | Enamel thickness 1(70±15µm) | Enamel thickness 2(150±15µm) |
| Example 1 | 1 | 1 | ⊚ | ⊚ |
| Example 2 | 1 | 1 | ⊚ | ⊚ |
| Example 3 | 1 | 1 | ⊚ | ⊚ |
| Example 4 | 1 | 1 | ○ | ⊚ |
| Example 5 | 1 | 1 | ○ | ○ |
| Example 6 | 2 | 1 | ○ | ○ |
| Example 7 | 2 | 1 | ○ | ○ |
| Example 8 | 1 | 1 | ○ | ○ |
| Example 9 | 1 | 1 | ○ | ○ |
| Example 10 | 2 | 2 | ○ | ○ |
| Example 11 | 1 | 1 | ○ | ○ |
| Example 12 | 2 | 2 | ○ | ○ |
| Example 13 | 1 | 1 | ⊚ | ⊚ |
| Example 14 | 2 | 2 | ⊚ | ⊚ |
| Example 15 | 2 | 2 | ⊚ | ⊚ |
| Example 16 | 2 | 2 | ○ | ⊚ |
| Example 17 | 1 | 1 | ○ | ○ |
| Example 18 | 2 | 2 | ○ | ○ |
| Example 19 | 3 | 2 | ○ | ○ |
| Example 20 | 1 | 1 | ○ | ○ |
| Example 21 | 2 | 2 | ○ | ○ |
| Example 22 | 2 | 2 | ○ | ○ |
| Example 23 | 1 | 1 | ⊚ | ⊚ |
| Example 24 | 1 | 1 | ⊚ | ⊚ |
| Example 25 | 1 | 1 | ○ | ⊚ |
| Example 26 | 1 | 1 | ○ | ○ |
| Example 27 | 1 | 1 | ⊚ | ⊚ |
| Example 28 | 2 | 2 | ○ | ⊚ |
| Example 29 | 2 | 2 | Δ | ○ |
| Example 30 | 2 | 2 | ⊚ | ⊚ |
| Example 31 | 2 | 2 | ○ | ○ |
| Example 32 | 2 | 2 | ○ | ○ |
| Example 33 | 3 | 2 | Δ | ○ |
| Example 34 | 2 | 2 | Δ | ○ |
| Example 35 | 2 | 2 | ○ | ○ |
| Example 36 | 2 | 2 | ⊚ | ⊚ |
| Example 37 | 3 | 2 | ○ | ○ |
| Comparative Example 1 | 2 | 2 | Δ | Δ |
| Comparative Example 2 | 2 | 2 | Δ | Δ |
| Comparative Example 3 | 2 | 2 | Δ | Δ |
| Comparative Example 4 | 3 | 2 | × | Δ |
| Comparative Example 5 | 3 | 3 | × | Δ |
| Comparative Example 6 | 3 | 3 | Δ | Δ |
| Comparative Example 7 | 4 | 3 | × | × |
| Comparative Example 8 | 4 | 3 | × | Δ |

As can be seen from Table 4, after the above tests, all enamel steel products obtained by applying ceramic glaze layer to enamel steel covered with the surface treatment agent of Examples 1-37 and firing have the evaluation results of the adhesion of the enamel layer being "1" and "2", and the evaluation results of the surface pinhole rate of the enamel layer being "⊚" and "○", indicating that all enamel steel products have high adhesion at the interface between the enamel layer and the steel substrate for enameling , and the surface defects of the enamel layer such as surface pinhole incidence are remarkably low.

As can be known from the combination of Table 1, Table 2, Table 3, and Table 4, compared with Comparative Example 1-8, the organic composite coating formed in Examples 1-37 using the surface treatment agent of the present invention to coat the enamel substrate has a dry film thickness of 100 nm to 8 µm, so that the enamel steel coated with the surface treatment agent of the present invention has excellent processability such as stamping formability, and good resistance to various chemical media such as alkali-washing resistance and solvent resistance. The enamel steel product has high adhesion at the interface between the enamel layer and the steel substrate for enameling, and the surface defects of the enamel layer such as surface pinhole incidence are remarkably low. Moreover, the enamel steel covered with the surface treatment agent of the present invention can be processed without using lubricating oil and anti-rust oil, thereby simplifying the process flow of the enamel steel product and reducing the amount of the enamel used.

## Claims

1. A surface treatment agent for enamel steel or part consisting of an aqueous solution, comprising the following solid components in parts by mass:
15 to 55 parts of an aqueous polymer resin A,
32 to 58 parts of an organosilane coupling agent B having at least one epoxy functional group, wherein the ratio of parts by mass of the organosilane coupling agent B to parts by mass of the aqueous polymer resin A is 0.6 to 2.2;
0.2 to 3 parts of a polyol C containing at least three hydroxyl groups;
0.05 to 2 parts by mass of a molybdenum compound D, in terms of elemental molybdenum;
0.1 to 1 parts by mass of a phosphorus compound E, in terms of elemental phosphorus;
0.1 to 1 parts by mass of a zirconium compound F, in terms of elemental zirconium;
0.5 to 8 parts of a metal salt or an organometallic compound G having a function of promoting adhesion, wherein the metal salt or organometallic compound G is a metal salt or an organometallic compound which promotes the adhesion between the enamel layer and the steel substrate for enameling in the sintering process of the ceramic glaze layer; and the metal in the metal salt or organometallic compound G is at least one of Cu, Ca, Ba, W, Fe, Sb, Co, Al, In, Zn, Ni, Ti, V, Sn, Ge, Mn, Sr, and Ga.

2. The surface treatment agent according to claim 1, wherein, the aqueous polymer resin A is at least one selected from polyester, polyurethane, and polyacrylic acid.

3. The surface treatment agent according to claim 1, wherein, the polyol has a boiling point of 120~320 °C.

4. The surface treatment agent according to claim 1, wherein, the zirconium compound F is a fluorine-containing zirconium compound.

5. The surface treatment agent according to claim 1, wherein, the metal salt or organometallic compound G is at least one selected from: a nitrate of iron, a nitrate of cobalt, a nitrate of nickel, a nitrate of copper, ferric acetate, cobaltous acetate, nickel oxalate, nickel acetate and copper acetate.

6. A enamel steel, wherein, the surface thereof has an organic composite coating formed by coating the surface with the surface treatment agent according to any one of claims 1-5; and there is a transition layer between the enamel steel and the organic composite coating, the transition layer is formed by metal iron and the reduced metal from the metal salt or organometallic compound G, wherein the metal salt or organometallic compound G is at least one selected from: a nitrate of cobalt, a nitrate of nickel, a nitrate of copper, cobaltous acetate, nickel oxalate, nickel acetate and copper acetate.

7. The enamel steel according to claim 6, wherein, the organic composite coating has a dry film thickness of 100 nm to 8 µm.

8. The enamel steel according to claim 7, wherein, the organic composite coating has a dry film thickness of 300 nm to 2 µm.

9. An enamel steel product, comprising the enamel steel according to any one of claims 6-8.

10. A manufacturing method for an enamel steel product comprising: coating a steel substrate for enamel with the surface treatment agent according to claims 1 to 5 by coil coating, dip-coating or spray coating, and curing the surface treatment agent at a temperature of 100~180 °C to obtain an organic composite coating.

11. The manufacturing method for an enamel steel product according to claim 10, further comprising the steps of:
(1) degreasing, cleaning and drying to remove surface contaminants;
(2) applying a ceramic glaze layer and firing.

12. The manufacturing method according to claim 11, wherein, firing temperature in the step (2) is 600 °C or more.

13. The manufacturing method according to claim 11, wherein, a step of processing the steel plate into a part is further comprised between the step of curing the surface treatment agent and the step (1).

## Patentansprüche

1. Oberflächenbehandlungsmittel für Emailstahl oder einem Teil, bestehend aus einer wässrigen Lösung, die die folgenden festen Komponenten in Masseteilen enthält:
15 bis 55 Teile eines wässrigen Polymerharzes A,
32 bis 58 Teile eines Organosilan-Haftvermittlers B mit mindestens einer funktionellen Epoxygruppe, wobei das Verhältnis der Masseteile des Organosilan-Haftvermittlers B zu den Masseteilen des wässrigen Polymerharzes A 0,6 bis 2,2 beträgt;
0,2 bis 3 Teile eines Polyols C, das mindestens drei Hydroxylgruppen enthält;
0,05 bis 2 Masseteile einer Molybdänverbindung D, bezogen auf elementares Molybdän;
0,1 bis 1 Masseteile einer Phosphorverbindung E, bezogen auf elementaren Phosphor;
0,1 bis 1 Masseteile einer Zirconiumverbindung F, bezogen auf elementares Zirconium;
0,5 bis 8 Teile eines Metallsalzes oder einer metallorganischen Verbindung G mit einer Funktion zur Förderung der Haftung, wobei das Metallsalz oder die metallorganische Verbindung G ein Metallsalz oder eine metallorganische Verbindung ist, die die Haftung zwischen der Emailschicht und dem Stahlsubstrat für die Emaillierung im Sinterprozess der keramischen Glasurschicht fördert; und das Metall in dem Metallsalz oder der metallorganischen Verbindung G mindestens eines von Cu, Ca, Ba, W, Fe, Sb, Co, Al, In, Zn, Ni, Ti, V, Sn, Ge, Mn, Sr und Ga ist.

2. Oberflächenbehandlungsmittel nach Anspruch 1, wobei das wässrige Polymerharz A mindestens eines ausgewählt aus Polyester, Polyurethan und Polyacrylsäure ist.

3. Oberflächenbehandlungsmittel nach Anspruch 1, wobei das Polyol einen Siedepunkt von 120 ~ 320 °C aufweist.

4. Oberflächenbehandlungsmittel nach Anspruch 1, wobei die Zirconiumverbindung F eine fluorhaltige Zirconiumverbindung ist.

5. Oberflächenbehandlungsmittel nach Anspruch 1, wobei das Metallsalz oder die metallorganische Verbindung G mindestens eine/s ausgewählt aus: einem Eisennitrat, einem Cobaltnitrat, einem Nickelnitrat, einem Kupfernitrat, Eisen(III)-acetat, Cobaltacetat, Nickeloxalat, Nickelacetat und Kupferacetat ist.

6. Emailstahl, wobei dessen Oberfläche eine organische Kompositbeschichtung aufweist, die durch Beschichten der Oberfläche mit dem Oberflächenbehandlungsmittel nach einem der Ansprüche 1-5 gebildet ist; und es eine Übergangsschicht zwischen dem Emailstahl und der organischen Kompositbeschichtung gibt, wobei die Übergangsschicht durch Metalleisen und dem reduzierten Metall aus dem Metallsalz oder der metallorganischen Verbindung G gebildet ist, wobei das Metallsalz oder die metallorganische Verbindung G mindestens eine/s ausgewählt aus: einem Cobaltnitrat, einem Nickelnitrat, einem Kupfernitrat, Cobaltacetat, Nickeloxalat, Nickelacetat und Kupferacetat ist.

7. Emailstahl nach Anspruch 6, wobei die organische Kompositbeschichtung eine Trockenschichtdicke von 100 nm bis 8 µm aufweist.

8. Emailstahl nach Anspruch 7, wobei die organische Kompositbeschichtung eine Trockenschichtdicke von 300 nm bis 2 µm aufweist.

9. Emailstahlprodukt, das den Emailstahl nach einem der Ansprüche 6-8 umfasst.

10. Verfahren zur Herstellung eines Emailstahlprodukts, umfassend: Beschichten eines Stahlsubstrats für Emaille mit dem Oberflächenbehandlungsmittel nach einem der Ansprüche 1 bis 5 durch Coil Coating, Tauchbeschichten oder Sprühbeschichten und Härten des Oberflächenbehandlungsmittels bei einer Temperatur von 100 ~180 °C, um eine organische Kompositbeschichtung zu erhalten.

11. Verfahren zur Herstellung eines Emailstahlprodukts nach Anspruch 10, das ferner die folgenden Schritte umfasst:
(1) Entfettung, Reinigung und Trocknung zur Entfernung von Oberflächenverunreinigungen;
(2) Auftragen einer keramischen Glasurschicht und Brennen.

12. Herstellungsverfahren nach Anspruch 11, wobei die Brenntemperatur in Schritt (2) 600 °C oder mehr beträgt.

13. Herstellungsverfahren nach Anspruch 11, ferner umfassend zwischen dem Schritt des Härtens des Oberflächenbehandlungsmittels und dem Schritt (1) einen Schritt der Bearbeitung der Stahlplatte zu einem Teil.

## Revendications

1. Agent de traitement de surface pour de l'acier émaillé ou une pièce, constitué d'une solution aqueuse, comprenant les composants solides suivants en parties en masse :
15 à 55 parties d'une résine de polymère aqueuse A,
32 à 58 parties d'un agent de couplage organosilane B ayant au moins un groupe fonctionnel époxy, dans lequel le rapport des parties en masse de l'agent de couplage organsine B aux parties en masse de la résine de polymère aqueuse A est de 0,6 à 2,2 ;
0,2 à 3 parties d'un polyol C contenant au moins trois groupes hydroxyles ;
0,05 à 2 parties en masse d'un composé de molybdène D, en termes de molybdène élémentaire ;
0,1 à 1 partie en masse d'un composé de phosphore E, en termes de phosphore élémentaire ;
0,1 à 1 partie en masse d'un composé de zirconium F, en termes de zirconium élémentaire ;
0,5 à 8 parties d'un sel métallique ou d'un composé organométallique G ayant une fonction de favorisation de l'adhérence, dans lequel le sel métallique ou le composé organométallique G est un sel métallique ou un composé organométallique qui favorise l'adhérence entre la couche d'émail et le substrat en acier pour l'émaillage dans le procédé de frittage de la couche de glaçure céramique ;
et le métal dans le sel métallique ou le composé organométallique G est au moins l'un de Cu, Ca, Ba, W, Fe, Sb, Co, Al, In, Zn, Ni, Ti, V, Sn, Ge, Mn, Sr et Ga.

2. Agent de traitement de surface selon la revendication 1, dans lequel la résine de polymère aqueuse A est au moins une sélectionnée parmi le polyester, le polyuréthane et le poly(acide acrylique).

3. Agent de traitement de surface selon la revendication 1, dans lequel le polyol a un point d'ébullition de 120 à 320 °C.

4. Agent de traitement de surface selon la revendication 1, dans lequel le composé de zirconium F est un composé de zirconium contenant du fluor.

5. Agent de traitement de surface selon la revendication 1, dans lequel le sel métallique ou le composé organométallique G est au moins un sélectionné parmi : un nitrate de fer, un nitrate de cobalt, un nitrate de nickel, un nitrate de cuivre, un acétate ferrique, un acétate de cobalt, un oxalate de cobalt, un acétate de nickel et un acétate de cuivre.

6. Acier émaillé, dans lequel la surface de celui-ci a un revêtement composite organique formé par revêtement de la surface avec l'agent de traitement de surface selon l'une quelconque des revendications 1 à 5 ; et il existe une couche de transition entre l'acier émaillé et le revêtement composite organique, la couche de transition est formée par du fer métallique et le métal réduit issu du sel métallique ou du composé organométallique G, dans lequel le sel métallique ou le composé organométallique G est au moins un sélectionné parmi : un nitrate de cobalt, un nitrate de nickel, un nitrate de cuivre, un acétate de cobalt, un oxalate de nickel, un acétate de nickel et un acétate de cuivre.

7. Acier émaillé selon la revendication 6, dans lequel le revêtement composite organique a une épaisseur de film sec de 100 nm à 8 µm.

8. Acier émaillé selon la revendication 7, dans lequel le revêtement composite organique a une épaisseur de film sec de 300 nm à 2 µm.

9. Produit d'acier émaillé, comprenant l'acier émaillé selon l'une quelconque des revendications 6 à 8.

10. Procédé de fabrication pour un produit d'acier émaillé comprenant : le revêtement d'un substrat en acier émaillé avec l'agent de traitement de surface selon les revendications 1 à 5 par revêtement sur bande, revêtement par immersion ou revêtement par pulvérisation, et durcissement de l'agent de traitement de surface à une température de 100 à 180 °C pour obtenir un revêtement composite organique.

11. Procédé de fabrication pour un produit d'acier émaillé selon la revendication 10, comprenant en outre les étapes de :
(1) dégraissage, nettoyage et séchage pour éliminer les contaminants de surface ;
(2) application d'une couche de glaçure céramique et chauffe.

12. Procédé de fabrication selon la revendication 11, dans lequel la température de chauffe dans l'étape (2) est de 600 °C ou plus.

13. Procédé de fabrication selon la revendication 11, dans lequel une étape de traitement de la plaque d'acier en une pièce est en outre comprise entre l'étape de durcissement de l'agent de traitement de surface et l'étape (1).
